# EUROPEAN PATENT SPECIFICATION

(11) **EP 2 624 255 B1**
(45) Date of publication and mention of the grant of the patent: **18.04.2018**
(21) Application number: 11828874.5
(22) Date of filing: 21.09.2011
(51) Int. Cl.: G21C 17/00, G06F 11/16, G21D 3/04

(54) **CONTROL DEVICE, AND NUCLEAR POWER PLANT CONTROL SYSTEM**
STEUERVORRICHTUNG UND STEUERSYSTEM FÜR EIN KERNKRAFTWERK
DISPOSITIF DE COMMANDE, ET SYSTÈME DE COMMANDE DE CENTRALE NUCLÉAIRE

(30) Priority: 30.09.2010 JP 2010222484
(43) Date of publication of application: 07.08.2013
(73) Proprietor: Mitsubishi Heavy Industries, Ltd., Tokyo 108-8215 (JP)
(72) Inventor: KIUCHI, Shinji, Tokyo 108-8215 (JP); SHINOHARA, Hironobu, Tokyo 108-8215 (JP); AKIZUKI, Yasutake, Tokyo 108-8215 (JP); FUKUI, Toshiki, Tokyo 108-8215 (JP); SHIRASAWA, Hiroshi, Tokyo 108-8215 (JP)
(74) Representative: Intès, Didier Gérard André
(86) International application number: PCT/JP2011/071432
(87) International publication number: WO 2012/043317

(56) References cited:
- EP-A2- 1 667 024
- WO-A1-2009/060953
- JP-A- 61 233 845
- JP-A- 63 000 736
- JP-A- 63 234 193
- JP-A- 2003 287 587
- JP-A- 2010 205 261
- US-A1- 2004 078 101

## Description

### Field

The present invention relates to a control device and a nuclear power plant control system, and particularly to a control device and a nuclear power plant control system that can enhance reliability at the test time.

### Background

A nuclear power plant, which requires high safety, includes a control system called a safety protection system in addition to a control system that controls normal operation of the plant. The safety protection system has required extremely high reliability in order that even in an unusual situation where all other control systems become inoperative, the safety protection system can sense an abnormal event to automatically start actuation of a nuclear reactor shutdown system, and engineered safety features.

In order to realize the high reliability, the safety protection system includes a plurality of systems operating independently from each other. A control device that executes various types of controls in each of the systems includes multiplexed arithmetic units in case a failure occurs in one of the arithmetic units. The multiplexed arithmetic units have a standby redundancy configuration in which one of the arithmetic units is an active system, and the other arithmetic units are standby systems (e.g., refer to Patent Literature 1).

Moreover, since the safety protection system undertakes a very important role to the nuclear power plant, testing is required. When a test of the safety protection system is required to be conducted during operation of the nuclear power plant, operation is performed, in which the plurality of systems making up the safety protection system are shut down one by one to conduct the test.

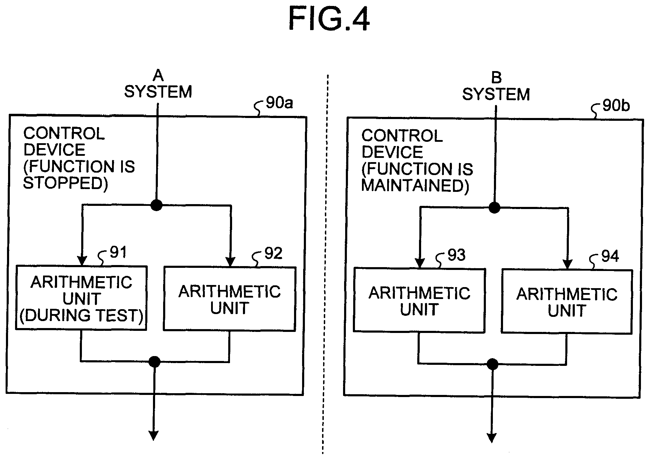

Referring to FIG. 4, a specific description will be given. In FIG. 4, a control device 90a is included in an A system, which is one of the plurality of systems making up the safety protection system. A control device 90b is included in a B system, which is one of the plurality of systems making up the safety protection system. The control device 90a includes an arithmetic unit 91 and an arithmetic unit 92 having the standby redundancy configuration, and the control device 90b includes an arithmetic unit 93 and an arithmetic unit 94 having the standby redundancy configuration.

Here, when a test of the arithmetic unit 91 is conducted during operation of the nuclear power plant, a function of the control device 90a is stopped while the control device 90b maintains a function thereof. As a result, during the test of the arithmetic unit 91, while the A system stops the function thereof, the B system maintains the function thereof, and thus, the function of the safety protection system is maintained.

### Citation List

### Patent Literature

Patent Literature 1: Japanese Patent Application Laid-open No. 2003-287587
US2004/078101 relates to a plant protective instrumentation equipment and EP1667024 relates to a memory based cross compare for cross checked systems.

### Summary

### Technical Problem

However, when the test of the safety protection system is conducted during operation of the nuclear power plant, using the conventional method as illustrated in FIG. 4, since the function of one of the systems making up the safety protection system temporarily stops, multiplicity of the safety protection system is reduced, thereby reducing the reliability.

The present invention is devised in light of the foregoing, and an object of the present invention is to provide a control device and a nuclear power plant control system that can enhance reliability at the test time. Solution to Problem

According to an aspect of the present invention, a control device used in a safety protection system of a nuclear power plant is defined by claim 1 and includes: a plurality of arithmetic units that respectively execute arithmetic processing in parallel and independently, based on a detection result of a detection unit for detecting a specific event occurring in the nuclear power plant, and each output a control signal to control countermeasure unit for taking countermeasures against the event in accordance with an arithmetic result of the arithmetic processing; a transmission unit that sends out the control signal to the countermeasure unit, when the control signal is outputted from at least one of the plurality of arithmetic units; and a control unit that performs control so as to inhibit the control signal outputted by the arithmetic unit as a test object from being sent out from the transmission unit while maintaining a state where the other arithmetic unit executes the arithmetic processing independently, when a test of one of the plurality of the arithmetic units is conducted.

Since this control device can maintain the function while carrying out the test during plant operation, the reliability at the test time can be enhanced.

According to another aspect of the present invention, a nuclear power plant control system that controls a safety protection system of a nuclear power plant as defined by claim 2 and includes: a detection unit for detecting a specific event occurring in the nuclear power plant; a countermeasure unit for taking countermeasures against the event; and a plurality of control devices that respectively operate independently. The control devices may each include a plurality of arithmetic units that respectively execute arithmetic processing in parallel and independently, based on a detection result of the detection unit, and each output a control signal to control the countermeasure unit in accordance with an arithmetic result of the arithmetic processing, a transmission unit that sends out the control signal to the countermeasure unit, when the control signal is outputted from at least one of the plurality of arithmetic units, and a control unit that performs control so as to inhibit the control signal outputted by the arithmetic unit as a test object from being sent out from the transmission unit while maintaining a state where the other arithmetic unit executes the arithmetic processing independently, when a test of one of the plurality of the arithmetic units is conducted.

Since this nuclear power plant control system can maintain the function while carrying out the test during plant operation, the reliability at the test time can be enhanced.

Advantageously, in the nuclear power plant control system, after the test of the arithmetic unit as the test object is completed, the control unit causes matching processing to be executed, in which a progress status of the arithmetic processing of the arithmetic unit as the test object is matched with a progress status of the arithmetic processing of the other arithmetic unit, and after the matching processing is completed, the control unit causes the plurality of arithmetic units to perform the arithmetic processing in parallel and independently.

In this aspect, since the plurality of arithmetic units perform the arithmetic processing in parallel independently after the test is completed, the reliability of the control device can be enhanced.

Moreover, in another aspect of the present invention, the control unit stops a function of outputting the control signal that the arithmetic unit as the test object has, by which the control is performed so as to inhibit the control signal outputted by the arithmetic unit as the test object from being sent out from the transmission unit.

In this aspect, since the processing of the arithmetic unit as the test object can be prevented from affecting outside, the processing of the other arithmetic unit is continued even at the test time to maintain the function of the control device, which can enhance the reliability at the test time.

### Advantageous Effects of Invention

The control device and the nuclear power plant control system according to the present invention exert the effect that the reliability can be enhanced even though a test is carried out during plant operation.

### Brief Description of Drawings

FIG. 1 is a diagram illustrating a schematic configuration of a nuclear power plant control system according to the present embodiment.
FIG. 2 is a sequence diagram illustrating operation of a control device.
FIG. 3 is a diagram illustrating one example of shift of an arithmetic cycle of arithmetic units.
FIG. 4 is a diagram illustrating operation of a conventional nuclear power plant control system at the test time.

### Description of Embodiments

Hereinafter, an embodiment of a control device and a nuclear power plant control system according to the present invention will be described in detail, based on the drawings. This embodiment does not limit this invention. Moreover, components in this embodiment include ones easily assumed by those in the art, substantially identical ones, and ones in a so-called equivalent range.

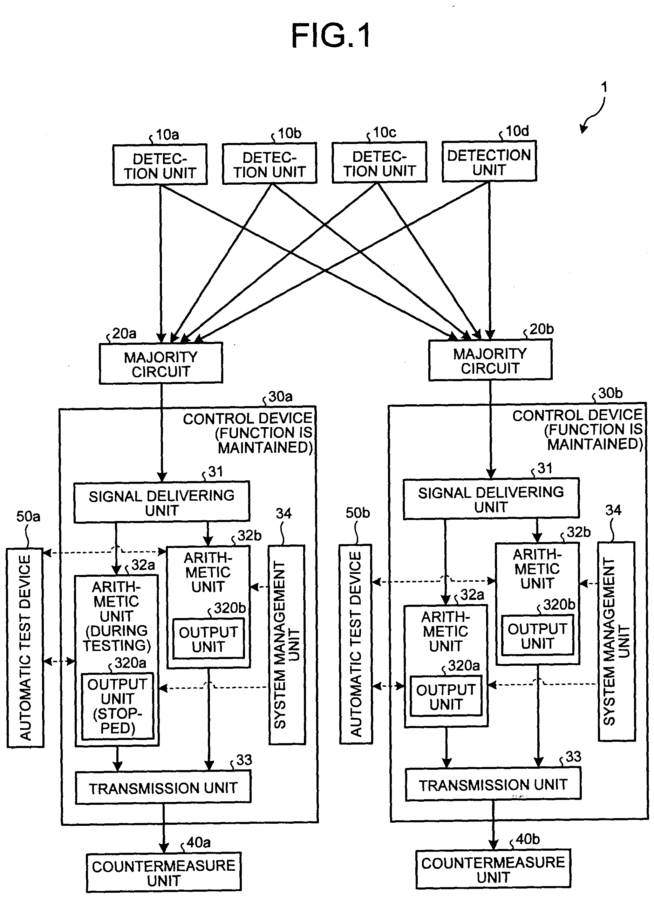

First, referring to FIG. 1, a schematic configuration of a nuclear power plant control system according to the present embodiment will be described. FIG. 1 is a diagram illustrating a schematic configuration of a nuclear power plant control system 1 according to the present embodiment. The nuclear power plant control system 1 is a control system that performs control of a safety protection system of a nuclear power plant.

As illustrated in FIG. 1, the nuclear power plant control system 1 includes a quadruplicated detection units 10a to 10d, duplicated majority circuits 20a and 20b, duplicated control devices 30a and 30b, duplicated countermeasure units 40a and 40b, and duplicated automatic test devices 50a and 50b.

The detection units 10a to 10d each detect a specific event that brings about some trouble to the operation of the nuclear power plant. The detection units 10a to 10d each have a sensor to detect a state of the nuclear power plant, and a threshold arithmetic unit to determine whether or not a detection value of the relevant sensor is a value indicating abnormality, and if the detection value of the relevant sensor is determined to be the value indicating abnormality, a detection signal is outputted to the majority circuits 20a and 20b.

When the detection signal is outputted from a predetermined number or more (e.g., 2 or more) of the detection units 10a to 10d, the majority circuit 20a transfers the detection signal to the control device 30a. When the detection signal is outputted from the predetermined number or more (e.g., 2 or more) of the detection units 10a to 10d, the majority circuit 20b transfers the detection signal to the control device 30b. The majority circuits 20a and 20b operate independently from each other.

The control device 30a determines whether or not the execution of some countermeasures is necessary, based on the detection signal transferred from the majority circuit 20a, and if it is determined that the execution of countermeasures is necessary, the control device 30a outputs a control signal instructing the execution of the countermeasures to the countermeasure unit 40a. The control device 30b determines whether or not the execution of some countermeasures is necessary, based on the detection signal transferred from the majority circuit 20b, and if it is determined that the execution of countermeasures is necessary, the control device 30b outputs a control signal instructing the execution of the countermeasures to the countermeasure unit 40b. The control devices 30a and 30b operate independently from each other.

The countermeasure unit 40a executes predetermined countermeasures, based on the control signal outputted from the control device 30a. The countermeasure unit 40b executes predetermined countermeasures, based on the control signal outputted from the control device 30b. The countermeasure units 40a and 40b operate independently from each other.

The automatic test device 50a conducts a test of the control device 30a during operation of the nuclear power plant. The automatic test device 50b conducts a test of the control device 30b during operation of the nuclear power plant. The automatic test devices 50a and 50b each conduct the test independently at specified timing.

In this manner, in the nuclear power plant control system 1, the respective units are multiplexed lest the function is lost by a signal failure, and the respective units operate independently. In the nuclear power plant control system 1 having the above-described configuration, the control devices 30a and 30b assume an important role of determining whether or not the countermeasures against the detected event is to be executed. Therefore, an internal configuration of the control devices 30a and 30b is also multiplexed.

Since the control devices 30a and 30b have a similar configuration, taking the control device 30a as one example, the internal configuration of these devices will be described. As illustrated in FIG. 1, the control device 30a includes a signal delivering unit 31, duplicated arithmetic units 32a and 32b, a transmission unit 33, and a system management unit (control unit) 34. The signal delivering unit 31 delivers the detection signal received by the control device 30a to the arithmetic unit 32a and the arithmetic unit 32b.

The arithmetic units 32a and 32b each execute predetermined arithmetic processing, based on the detection signal, and output the control signal to cause the countermeasure unit 40a to execute the predetermined countermeasures in accordance with an arithmetic result. The arithmetic unit 32a includes an output unit 320a to output the control signal, and the arithmetic unit 32b includes an output unit 320b to output the control signal. Moreover, the arithmetic units 32a and 32b each include a processor to execute the arithmetic operation, a storage device that stores data used for the arithmetic operation and the arithmetic result, and the like, and execute the same arithmetic processing in parallel independently from each other.

When the control signal is outputted from at least one of the arithmetic units 32a and 32b, the transmission unit 33 sends out the outputted control signal to the countermeasure unit 40a. That is, when both the arithmetic unit 32a and the arithmetic unit 32b normally operate, and the control signal is outputted from both the arithmetic unit 32a and the arithmetic unit 32b, the transmission unit 33 sends out the outputted control signal to the countermeasure unit 40a. Moreover, when a failure occurs in any one of the arithmetic unit 32a and the arithmetic unit 32b, and the control signal is outputted from only one of the arithmetic unit 32a and the arithmetic unit 32b, the transmission unit 33 also sends out the outputted control signal to the countermeasure unit 40a.

The system management unit 34 controls the arithmetic units 32a and 32b so that the arithmetic units 32a and 32b execute the arithmetic processing in parallel independently. Moreover, when the automatic test device 50a tests the arithmetic unit 32a, the system management unit 34 stops the function of the output unit 320a to prevent the signal outputted by the arithmetic unit 32a from being transmitted to the transmission unit 33, and operates the arithmetic unit 32b as normal. On the other hand, when the automatic test device 50a tests the arithmetic unit 32b, the system management unit 34 stops the function of the output unit 320b to prevent the signal outputted by the arithmetic unit 32b from being transmitted to the transmission unit 33, and operates the arithmetic unit 32a as normal.

As in the above-described related art, when the plurality of arithmetic units included by the control device have a standby redundancy configuration, a sensing mechanism that senses abnormality of the arithmetic unit in an active system, and a switching mechanism that switches the active system and a standby system are required, the reliability of the control device is affected by an abnormality sensing rate of the sensing mechanism and reliability of the switching mechanism.

In contrast, in the control device 30a, in place of the standby redundancy configuration, the multiplexed arithmetic units 32a and 32b are configured so as to operate in parallel independently from each other lest the function is lost even if a failure occurs in one of them. Thus, the control device 30a is not affected by the abnormality sensing rate of the sensing mechanism that senses the abnormality in the active system, and the reliability of the switching mechanism that switches between the active system and the standby system, which can realize the higher reliability.

Moreover, when one of the redundant arithmetic units is tested, the control device 30a inhibits the control signal outputted by the arithmetic unit as a test object from being sent out from the transmission unit 33 to the countermeasure unit 40a, and then, operates the other arithmetic unit as normal to maintain the function of the control device 30a. Therefore, even when a test of the safety protection system is conducted during operation of the nuclear power plant, the functions of the respective systems making up the safety protection system can be maintained, thereby enhancing reliability during the test.

In the control device including the plurality of arithmetic units with the standby redundancy configuration as well, after inhibiting the control signal outputted by the arithmetic unit as the test object from being transmitted to the countermeasure unit 40a, the other arithmetic unit can be operated as normal. However, in this case, when the arithmetic unit in the active system is tested, complicated and precise processing of switching between the active system and the standby system is required, which increases a possibility that a failure occurs, and decreases the reliability.

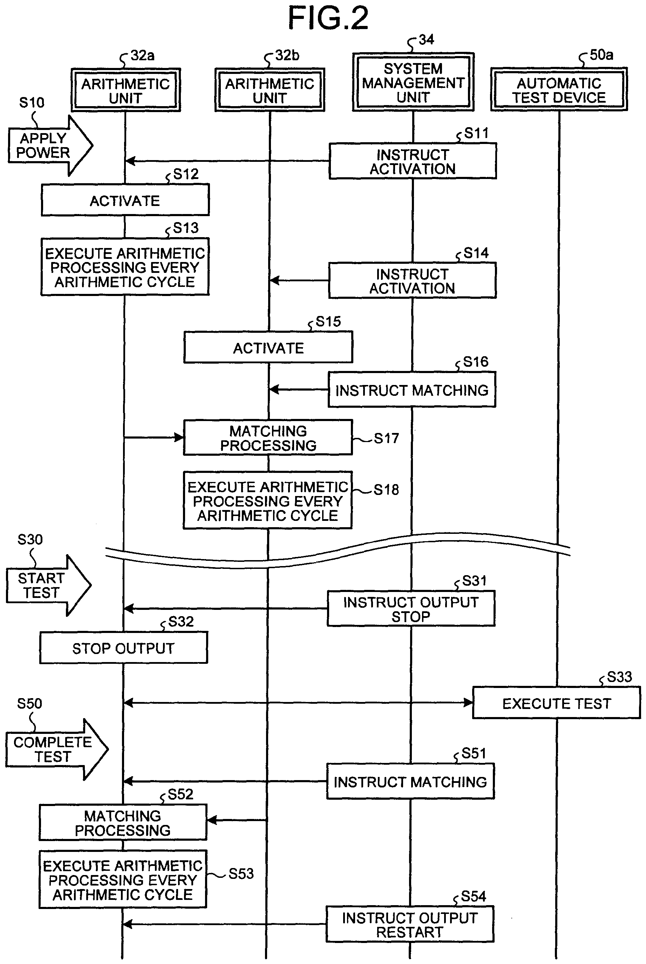

Next, operation of the control device 30a will be described with reference to FIG. 2. FIG. 2 is a sequence diagram illustrating the operation of the control device 30a. As illustrated in FIG. 2, when power is applied in step S10, the system management unit 34 instructs activation of the arithmetic unit 32a in step S11.

The arithmetic unit 32a starts the activation in accordance with the instruction in step S12. When the activation is completed, the arithmetic unit 32a executes the arithmetic processing every arithmetic cycle in step S13. The system management unit 34, after standing by for enough time to complete the activation of the arithmetic unit 32a, instructs activation of the arithmetic unit 32b in step S14. The arithmetic unit 32b starts the activation in accordance with the instruction in step S15.

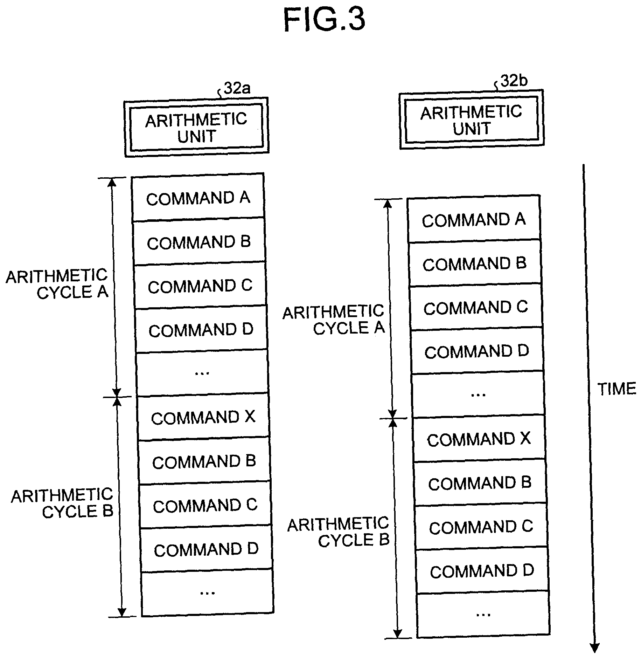

Here, the system management unit 34 may adjust activation timing of the arithmetic unit 32b so that the arithmetic cycles of the arithmetic unit 32a and the arithmetic unit 32b shift from each other. The adjustment of the activation timing by the system management unit 34 will be described with reference to FIG. 3. FIG. 3 is a diagram illustrating one example of the shift of the arithmetic cycles of the arithmetic unit 32a and the arithmetic unit 32b.

As illustrated in the example of FIG. 3, the arithmetic units 32a and 32b each execute one or a plurality of commands every arithmetic cycle of a constant length. The commands executed every arithmetic cycle include a command to self-diagnose that the safety protection system is normal, and the like in addition to a command to perform determination based on the detection signal. The arithmetic units 32a and 32b execute the same command(s) in the same order in the same arithmetic cycle.

As illustrated in the example of FIG. 3, the system management unit 34 may adjust the activation timing of the arithmetic unit 32b so that start timing of the arithmetic cycle of the arithmetic unit 32a and start timing of the arithmetic cycle of the arithmetic unit 32b shift. As a result, the arithmetic units 32a and 32b execute the same command in parallel while keeping a constant time difference. There is a possibility that the arithmetic operation by processors included by the arithmetic units 32a and 32b temporarily represents an erroneous value due to an uncertain factor such as radiation. The shift of the timing when the arithmetic unit 32a and the arithmetic unit 32b execute the command can decrease a possibility that the uncertain factor affects arithmetic results of both the arithmetic unit 32a and the arithmetic unit 32b.

When the shift between the start timing of the arithmetic cycle of the arithmetic unit 32a and the start timing of the arithmetic cycle of the arithmetic unit 32b is large, there arises a disadvantage that a difference between timing when the arithmetic unit 32a outputs the control signal to the countermeasure unit 40a and timing when the arithmetic unit 32b outputs the control signal to the countermeasure unit 40a becomes large, and thus, a magnitude of the shift is preferably shorter than the execution cycle of the command.

Referring back to FIG. 2, the system management unit 34 stands by for enough time to complete the activation of the arithmetic unit 32b, and then, in step S16, execution of matching to the arithmetic unit 32b, which has been activated subsequently, is instructed. The arithmetic unit 32b executes the matching processing in accordance with the instruction in step S17.

Specifically, the arithmetic unit 32b matches a progress status of the arithmetic processing of the arithmetic unit 32b to a progress status of the arithmetic processing of the arithmetic unit 32a already started. For example, the arithmetic unit 32b transcribes the data stored in the storage device of the arithmetic unit 32a to the storage device of the arithmetic unit 32b, and transcribes a value of a command pointer indicating a command being executed in the processor of the arithmetic unit 32a to a command pointer of the arithmetic unit 32b. The transcription of the data and the value of the command pointer may be realized by the arithmetic unit 32b reading the same from the arithmetic unit 32a, may be realized by the arithmetic unit 32a writing the same in the arithmetic unit 32b, or may be realized through the system management unit 34.

Moreover, in the case where the starting timing of the arithmetic cycle of the arithmetic unit 32a and the starting timing of the arithmetic cycle of the arithmetic unit 32b shift from each other, the system management unit 34 may cause the signal delivering unit 31 to adjust sending timing of the detection signal. In this case, specifically, the signal delivering unit 31 adjusts the timing when the detection signal is sent out so that the same detection signal can be obtained when the arithmetic units 32a and 32b execute the same command. For example, when the shift of the arithmetic cycles of the arithmetic units 32a and 32b is as illustrated in FIG. 3, the signal delivering unit 31 delays output timing of the detection signal to the arithmetic unit 32b by the magnitude of the shift of the arithmetic cycle.

After the matching processing has been completed in this manner, the arithmetic unit 32b executes the arithmetic processing every arithmetic cycle in step S18.

In this manner, the system management unit 34 matches the progress statuses of the arithmetic processing of the arithmetic unit 32a and the arithmetic unit 32b at the activation time of the control device 30a, and then operates the arithmetic unit 32a and the arithmetic unit 32b independently. This can create the state where the arithmetic unit 32a and the arithmetic unit 32b continue to execute the same command at almost the same timing while operating independently.

Thereafter, in step S30, a test of the arithmetic unit 32a is required. In this case, in step S31, the system management unit 34 instructs the stop of the function to the output unit 320a that the arithmetic unit 32a has in order to prevent the control signal outputted by the arithmetic unit 32a from being sent out from the transmission unit 33 to the countermeasure unit 40a, and the output unit 320a stops the function in step S32. At this time, the system management unit 34 allows the arithmetic unit 32b to operate as normal.

After the function of the output unit 320a stops, and the automatic test device 50a executes the test of the arithmetic unit 32a in step S33. Since the arithmetic unit 32b continues the normal operation while the function of the output unit 320a that the arithmetic unit 32a has is stopped and the test of the arithmetic unit 32a is being conducted, the control device 30a maintains the function thereof.

After the test of the arithmetic unit 32a is completed in step S50, in step S51, the system management unit 34 instructs execution of matching to the arithmetic unit 32a as a test object. The arithmetic unit 32a executes the matching processing in accordance with the instruction in step S52.

Specifically, the arithmetic unit 32a matches the progress status of the arithmetic processing of the arithmetic unit 32a to the progress status of the arithmetic processing of the arithmetic unit 32b, which is continuing the execution of the arithmetic processing. For example, the arithmetic unit 32a transcribes the data stored in the storage device of the arithmetic unit 32b to the storage device of the arithmetic unit 32a, and transcribes the value of the command pointer indicating the command being executed in the processor of the arithmetic unit 32b to the command pointer of the arithmetic unit 32a. The transcription of the data and the value of the command pointer may be realized by the arithmetic unit 32a reading the same from the arithmetic unit 32b, may be realized by the arithmetic unit 32b writing the same in the arithmetic unit 32a, or may be performed through the system management unit 34.

After the matching processing is completed in this manner, the arithmetic unit 32a executes the arithmetic processing every arithmetic cycle in step S53. The system management unit 34, in step S54, restores the function of the output unit 320a that the arithmetic unit 32a has so that the control signal outputted by the arithmetic unit 32a is sent out from the transmission unit 33 to the countermeasure unit 40a to thereby restart the output of the control signal.

In this manner, after the test of the arithmetic unit 32a is completed, the system management unit 34 matches the progress status of the arithmetic processing of the arithmetic unit 32a as the test object and the progress status of the arithmetic processing continuously executed of the arithmetic unit 32b, and then operates the arithmetic unit 32a and the arithmetic unit 32b independently. This can recreate the state where the arithmetic unit 32a and the arithmetic unit 32b continue to execute the same command at almost the same timing while operating independently.

As described above, in the present embodiment, the control device included in the nuclear power plant control system that controls the safety protection system is multiplexed, and the arithmetic unit included in the control device is further multiplexed so as to operate the respective arithmetic units in parallel independently. When a test of the arithmetic unit included in the control device is conducted, the operation of the other arithmetic unit is continued to maintain the function of the control device. This configuration makes it unnecessary to completely shut down the system when one of the systems making up the safety protection system is tested, which can enhance the reliability of the safety protection system at the test time.

The configuration of the nuclear power plant control system described in the foregoing embodiment can be arbitrarily modified in a range not departing from the gist of the present invention. For example, the multiplicity of the respective units of the nuclear power plant control system described in the foregoing embodiment may be arbitrarily modified in accordance with the required level of the reliability and the like.

While in the foregoing embodiment, when the automatic test device 50a tests the arithmetic unit 32b, the system management unit 34 stops the function of the output unit 320b in order to prevent the signal outputted by the arithmetic unit 32b from being sent out from the transmission unit 33 to the countermeasure unit 40a, another method may be used in order to prevent the signal outputted by the arithmetic unit 32b from being sent out from the transmission unit 33 to the countermeasure unit 40a.

Moreover, the nuclear power plant control system described in the foregoing embodiment can be used for control of a system other than the safety protection system and a plant other than the nuclear power plant.

### Reference Sings List

1 nuclear power plant control system
10a to 10d detection unit
20a, 20b majority circuit
30a, 30b, 90a, 90b control unit
31 signal delivering unit
32a, 32b, 91 to 94 arithmetic unit
320a, 320b output unit
33 transmission unit
34 system management unit
40a, 40b countermeasure unit

## Claims

1. A control device (30a, 30b) configured to be used in a safety protection system of a nuclear power plant, comprising:
two arithmetic units (32a, 32b) respectively configured to execute a same arithmetic processing in parallel and independently, based on a detection result of a detection unit (10a, 10b, 10c, 10d) for detecting a specific event occurring in the nuclear power plant, and to each output a control signal to control countermeasure unit (40a, 40b) for taking countermeasures against the event in accordance with an arithmetic result of the arithmetic processing;
a transmission unit (33) configured to send out the control signal to the countermeasure unit (40a, 40b), when the control signal is outputted from one of the two arithmetic units (32a, 32b); and
a control unit (34) configured to perform control so as to not output the control signal from the one arithmetic unit as a test object from being sent out from the transmission unit (33) while maintaining a state where the other arithmetic unit executes the arithmetic processing independently, when a test of the one arithmetic unit (32a, 32b) is conducted,
**characterized in that**
the two arithmetic units (32a, 32b) are configured so that their arithmetic cycles are shifted from each other by a magnitude shorter than the execution cycle of the command, and
the control unit (34) is configured to perform a matching process by transcribing a data stored in a storage device of the other arithmetic unit (32b) to a storage device of the one arithmetic unit (32a) and transcribing a value of a command pointer indicating a command being executed by the other arithmetic unit (32b) to a command pointer of the one arithmetic unit (32a), when the test of the one arithmetic unit (32a) is completed.

2. A nuclear power plant control system (1) for controlling a safety protection system of a nuclear power plant, comprising:
a detection unit (10a, 10b, 10c, 10d) for detecting a specific event occurring in the nuclear power plant;
a countermeasure unit (40a, 40b) for taking countermeasures against the event; and
a plurality of control devices (30a, 30b) according to claim 1, wherein the plurality of control devices (30a, 30b) are configured to operate independently.

3. A control method of a safety protection system of a nuclear power plant, comprising:
executing a same arithmetic processing in parallel and independently by using a plurality of arithmetic units (32a, 32b), based on a detection result of a detection unit (10a, 10b, 10c, 10d) for detecting a specific event occurring in the nuclear power plant, and outputting each a control signal to control countermeasure unit (40a, 40b) for taking countermeasures against the event in accordance with an arithmetic result of the arithmetic processing;
sending out the control signal to the countermeasure unit (40a, 40b) from a transmission unit (33), when the control signal is outputted from at least one of the plurality of arithmetic units (32a, 32b); and
performing control by using a control unit (34) so as to not output the control signal from the at least one arithmetic unit as a test object from being sent out from the transmission unit (33) while maintaining a state where the other arithmetic unit executes the arithmetic processing independently, when a test of the at least one arithmetic units (32a, 32b) is conducted,
**characterized in that** it further comprise
shifting arithmetic cycles of the plurality of arithmetic units (32a, 32b) from each other by a magnitude shorter than the execution cycle of the command, and
performing a matching process by transcribing a data stored in a storage device of the other arithmetic unit (32b) to a storage device of the at least one arithmetic unit (32a) and transcribing a value of a command pointer indicating a command being executed by the other arithmetic unit (32b) to a command pointer of the at least one arithmetic unit (32a), when the test of the at least one arithmetic unit (32a) is completed.

4. A control method of a nuclear power plant control system (1) for controlling a safety protection system of a nuclear power plant, comprising:
detecting a specific event occurring in the nuclear power plant by using a detection unit (10a, 10b, 10c, 10d) for;
taking countermeasures against the event by using a countermeasure unit (40a, 40b); and
providing a plurality of control devices (30a, 30b), and
performing the control method of safety protection system according to claim 3 for each of the plurality of control devices (30a, 30b).

## Patentansprüche

1. Steuergerät (30a, 30b), das dazu konfiguriert ist, in einem Sicherheitsschutzsystem eines Kernkraftwerks benutzt zu werden, umfassend:
zwei arithmetische Einheiten (32a, 32b), die jeweils dazu konfiguriert sind, auf Grundlage eines Erkennungsergebnisses einer Erkennungseinheit (10a, 10b, 10c, 10d) zum Erkennen eines spezifischen Ereignisses, das im Kernkraftwerk auftritt, dieselbe arithmetische Verarbeitung parallel und unabhängig auszuführen, und jeweils dazu, ein Steuersignal zum Steuern einer Gegenmaßnahmeneinheit (40a, 40b) zum Treffen von Gegenmaßnahmen gegen das Ereignis gemäß einem arithmetischen Ergebnis der arithmetischen Verarbeitung auszugeben,
eine Übertragungseinheit (33), die zum Aussenden des Steuersignals zur Gegenmaßnahmeneinheit (40a, 40b) konfiguriert ist, wenn das Steuersignal von einer der zwei arithmetischen Einheiten (32a, 32b) ausgegeben wird, und
eine Steuereinheit (34), die dazu konfiguriert ist, Steuerung derart auszuführen, dass das Steuersignal von der einen arithmetischen Einheit als Testobjekt vom Aussenden von der Übertragungseinheit (33) nicht ausgegeben wird, während ein Zustand beibehalten wird, in dem die andere arithmetische Einheit die arithmetische Verarbeitung unabhängig ausführt, wenn ein Test der einen arithmetischen Einheit (32a, 32b) durchgeführt wird,
**dadurch gekennzeichnet, dass**
die zwei arithmetischen Einheiten (32a, 32b) derart konfiguriert sind, dass ihre arithmetischen Zyklen um eine Größe zueinander verschoben sind, die kürzer als der Ausführungszyklus des Befehls ist, und
die Steuereinheit (34) zum Ausführen eines Abstimmungsprozesses durch Umschreiben von Daten, die in einem Speichergerät der anderen arithmetischen Einheit (32b) gespeichert sind, in ein Speichergerät der einen arithmetischen Einheit (32a) und Umschreiben eines Werts eines Befehlszeiger, der anzeigt, dass ein Befehl durch die andere arithmetische Einheit (32b) ausgeführt wird, in einen Befehlszeiger der einen arithmetischen Einheit (32a) konfiguriert ist, wenn der Test der einen arithmetischen Einheit (32a) abgeschlossen ist.

2. Kernkraftwerk-Steuersystem (1) zum Steuern eines Sicherheitsschutzsystems eines Kernkraftwerks, umfassend:
eine Erkennungseinheit (10a, 10b, 10c, 10d) zum Erkennen eines spezifischen Ereignisses, das im Kernkraftwerk auftritt,
eine Gegenmaßnahmeneinheit (40a, 40b) zum Treffen von Gegenmaßnahmen gegen das Ereignis, und
mehrere Steuergeräte (30a, 30b) nach Anspruch 1, wobei die mehreren Steuergeräte (30a, 30b) dazu konfiguriert sind, unabhängig zu arbeiten.

3. Steuerverfahren eines Sicherheitsschutzsystems eines Kernkraftwerks, umfassend:
paralleles und unabhängiges Ausführen derselben arithmetischen Verarbeitung unter Verwendung von mehreren arithmetischen Einheiten (32a, 32b) auf Grundlage eines Erkennungsergebnisses einer Erkennungseinheit (10a, 10b, 10c, 10d) zum Erkennen eines spezifischen Ereignisses im Kernkraftwerk und jeweiliges Ausgeben eines Steuersignals zum Steuern der Gegenmaßnahmeneinheit (40a, 40b) zum Treffen von Gegenmaßnahmen gegen das Ereignis gemäß einem arithmetischen Ergebnis der arithmetischen Verarbeitung,
Aussenden des Steuersignals zur Gegenmaßnahmeneinheit (40a, 40b) aus einer Übertragungseinheit (33), wenn das Steuersignal von zumindest einer der mehreren arithmetischen Einheiten (32a, 32b) ausgegeben wird, und
derartiges Ausführen von Steuerung unter Verwendung einer Steuereinheit (34), dass das Steuersignal von der zumindest einen arithmetischen Einheit als Testobjekt vom Aussenden von der Übertragungseinheit (33) nicht ausgegeben wird, während ein Zustand beibehalten wird, in dem die andere arithmetische Einheit die arithmetische Verarbeitung unabhängig ausführt, wenn ein Test der zumindest einen arithmetischen Einheit (32a, 32b) durchgeführt wird,
**dadurch gekennzeichnet, dass** es ferner umfasst:
Verschieben von arithmetischen Zyklen der mehreren arithmetischen Einheiten (32a, 32b) zueinander um eine Größe, die kürzer als der Ausführungszyklus des Befehls ist, und
Ausführen eines Abstimmungsprozesses durch Umschreiben von Daten, die in einem Speichergerät der anderen arithmetischen Einheit (32b) gespeichert sind, in ein Speichergerät der zumindest einen arithmetischen Einheit (32a) und Umschreiben eines Werts eines Befehlszeigers, der anzeigt, dass ein Befehl durch die andere arithmetische Einheit (32b) ausgeführt wird, in einen Befehlszeiger der zumindest einen arithmetischen Einheit (32a), wenn der Test der zumindest einen arithmetischen Einheit (32a) abgeschlossen ist.

4. Steuerverfahren eines Kernkraftwerk-Steuersystems (1) zum Steuern eines Sicherheitsschutzsystems eines Kernkraftwerks, umfassend:
Erkennen eines spezifischen Ereignisses, das im Kernkraftwerk auftritt, unter Verwendung einer Erkennungseinheit (10a, 10b, 10c, 10d),
Treffen von Gegenmaßnahmen gegen das Ereignis unter Verwendung einer Gegenmaßnahmeneinheit (40a, 40b) und
Vorsehen von mehreren Steuergeräten (30a, 30b) und
Ausführen des Steuerverfahrens des Sicherheitsschutzsystems nach Anspruch 3 für jede der mehreren Steuergeräte (30a, 30b).

## Revendications

1. Dispositif de commande (30a, 30b) configuré pour être utilisé dans un système de protection de sécurité d'une centrale nucléaire, comportant :
deux unités arithmétiques (32a, 32b) respectivement configurées pour exécuter un même traitement arithmétique en parallèle et de manière indépendante, sur la base d'un résultat de détection d'une unité de détection (10a, 10b, 10c, 10d) pour détecter un événement particulier se produisant dans la centrale nucléaire, et pour délivrer chacune un signal de commande pour commander une unité de contre-mesures (40a, 40b) pour prendre des contre-mesures contre l'événement en fonction d'un résultat arithmétique du traitement arithmétique ;
une unité de transmission (33) configurée pour envoyer le signal de commande à l'unité de contre-mesures (40a, 40b), quand le signal de commande est délivré par une des deux unités arithmétiques (32a, 32b) ; et
une unité de commande (34) configurée pour réaliser une commande de façon à ne pas délivrer le signal de commande provenant d'une première unité arithmétique comme objet d'essai devant être envoyé depuis l'unité de transmission (33) tout en maintenant un état où l'autre unité arithmétique exécute le traitement arithmétique de manière indépendante, quand un essai de la première unité arithmétique (32a, 32b) est effectué,
**caractérisé en ce que**
les deux unités arithmétiques (32a, 32b) sont configurées de telle sorte que leurs cycles arithmétiques sont décalés l'un par rapport à l'autre d'une amplitude plus faible que le cycle d'exécution de la commande, et
l'unité de commande (34) est configurée pour réaliser un processus de concordance en transcrivant des données stockées dans un dispositif de stockage de l'autre unité arithmétique (32b) vers un dispositif de stockage de la première unité arithmétique (32a) et en transcrivant une valeur d'un pointeur de commande indiquant une commande qui est exécutée par l'autre unité arithmétique (32b) à un pointeur de commande de la première unité arithmétique (32a), quand l'essai de la première unité arithmétique (32a) est terminé.

2. Système de commande de centrale nucléaire (1) pour commander un système de protection de sécurité d'une centrale nucléaire, comportant :
une unité de détection (10a, 10b, 10c, 10d) pour détecter un événement particulier se produisant dans la centrale nucléaire ;
une unité de contre-mesures (40a, 40b) pour prendre des contre-mesures contre l'événement ; et
une pluralité de dispositifs de commande (30a, 30b) selon la revendication 1, dans lequel la pluralité des dispositifs de commande (30a, 30b) sont configurés pour fonctionner de manière indépendante.

3. Procédé de commande d'un système de protection de sécurité d'une centrale nucléaire, comportant :
exécuter un même traitement arithmétique en parallèle et de manière indépendante en utilisant une pluralité d'unités arithmétiques (32a, 32b), sur la base d'un résultat de détection d'une unité de détection (10a, 10b, 10c, 10d) pour détecter un événement particulier se produisant dans la centrale nucléaire, et délivrer chacune un signal de commande pour commander une unité de contre-mesures (40a, 40b) pour prendre des contre-mesures contre l'événement en fonction d'un résultat arithmétique du traitement arithmétique ;
envoyer le signal de commande à l'unité de contre-mesures (40a, 40b) à partir d'une unité de transmission (33), quand le signal de commande est délivré à partir d'au moins une unité de la pluralité d'unités arithmétiques (32a, 32b) ; et
réaliser une commande en utilisant une unité de commande (34) de façon à ne pas délivrer le signal de commande à partir de la au moins une unité arithmétique comme objet d'essai devant être envoyé à partir de l'unité de transmission (33) tout en maintenant un état où l'autre unité arithmétique exécute le traitement arithmétique indépendamment, quand un essai de la au moins une unité arithmétique (32a, 32b) est effectué,
**caractérisé en ce qu'**il comporte en outre
décaler des cycles arithmétiques de la pluralité d'unités arithmétiques (32a, 32b) l'un par rapport à l'autre d'une amplitude plus faible que le cycle d'exécution de la commande, et
réaliser un processus de correspondance en transcrivant des données stockées dans un dispositif de stockage de l'autre unité arithmétique (32b) vers un dispositif de stockage de la au moins une unité arithmétique (32a) et en transcrivant une valeur d'un pointeur de commande indiquant une commande qui est exécutée par l'autre unité arithmétique (32b) vers un pointeur de commande de la au moins une unité arithmétique (32a), quand l'essai de la au moins une unité arithmétique (32a) est terminé.

4. Procédé de commande d'un système de commande de centrale nucléaire (1) pour commander un système de protection de sécurité d'une centrale nucléaire, comportant :
détecter un événement particulier se produisant dans la centrale nucléaire en utilisant une unité de détection (10a, 10b, 10c, 10d) pour ;
prendre des contre-mesures contre l'événement en utilisant une unité de contre-mesures (40a, 40b) ; et
prévoir une pluralité de dispositifs de commande (30a, 30b), et
mettre en oeuvre le procédé de commande de système de protection de sécurité selon la revendication 3 pour chaque dispositif de la pluralité de dispositifs de commande (30a, 30b).
